# EUROPEAN PATENT APPLICATION

(11) **EP 0 637 501 A1**
(43) Date of publication of application: **08.02.1995**
(21) Application number: 94111632.9
(22) Date of filing: 26.07.1994
(51) Int. Cl.: B29C 65/72

(54) **Apparatus for joining sheets, particularly sheets of reinforced plastics for producing tensile structures**

(30) Priority: 29.07.1993 IT BO930336
(71) Applicant: RESTA S.R.L., I-48018 Faenza (Ravenna) (IT); CANOBBIO S.p.A., I-20135 Milan (IT); GENERATORI ELETTRONICI ALTA FREQUENZA G.E.A.F. S.R.L., I-43030 Calestano (Parma) (IT)
(72) Inventor: Resta, Roberto, I-48018 Faenza (Ravenna) (IT); Canobbio, Roberto, I-15057 Tortona (Alessandria) (IT); Ollari, Ermes, I-43030 Calestano (Parma) (IT)
(74) Representative: Modiano, Guido, Dr.-Ing.

(57) **Abstract**

Apparatus for joining sheets of plastics comprising: a sliding track (5,6) that extends horizontally in a first direction (X); means (4,43) for positioning the sheets (46,47) so that the borders of the flaps to be joined are aligned, mutually adjacent and mutually parallel; a stitching device and a welding device that are both movable along the track (5,6) and are suitable to form the joint by producing stitching and welding lines along the borders.

## Description

The present invention relates to an apparatus for joining sheets, particularly sheets of reinforced plastics for producing tensile structures.

As is known, sheets of reinforced plastics, for example constituted by a polyester net embedded in a layer of PVC, are used to produce tensile structures. Such sheets may be very large and their joining requires the execution of welds reinforced with stitching lines which are mostly produced manually, with a great expenditure of time and labor.

The principal aim of the present invention is to provide an apparatus that allows to obviate the above drawbacks of the known art, especially as regards the possibility of supporting and handling large sheets during joining operations.

This aim is achieved with an apparatus for joining sheets of plastics characterized in that it comprises: a sliding track that lies horizontally in a direction X; means for positioning the sheets so that the borders to be joined are aligned and mutually adjacent; a stitching device and a welding device that are both movable along said track and suitable to form the joint by producing stitching and welding lines along said border.

Further characteristics and advantages of the present invention will become apparent from the following detailed description of a preferred embodiment, illustrated only by way of non-limitative example in the accompanying drawings, wherein:

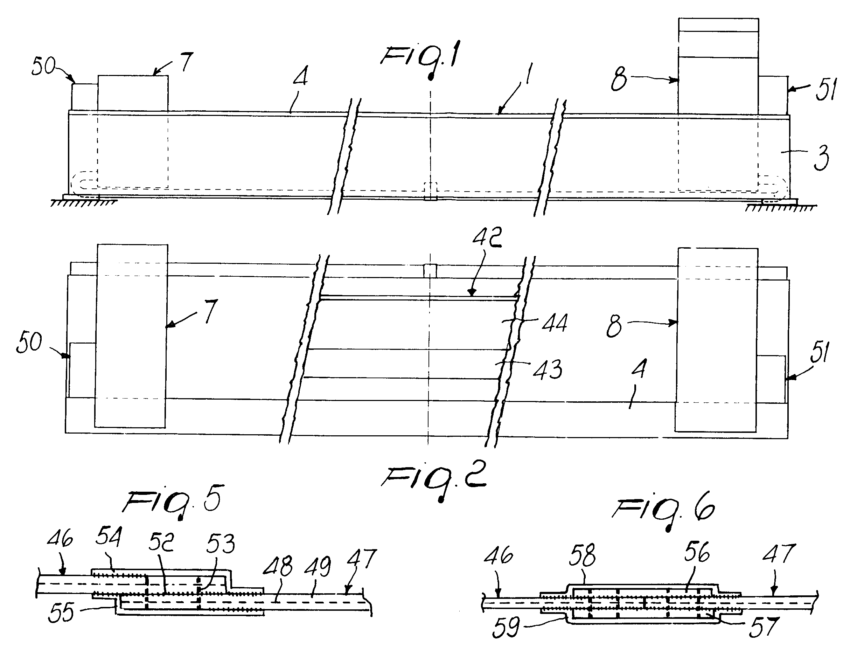

figure 1 is a schematic elevation view of an apparatus according to the present invention;
figure 2 is a plan view of the apparatus of figure 1;
figure 3 is a perspective view of the stitching device;
figure 4 is a bottom perspective view of the device of figure 3; and
figures 5 and 6 are views of two types of joint.

With reference to the above figures, the reference numeral 1 designates the frame of the apparatus, which comprises a base or footing 2 that extends lengthwise and a wall 3 which rises from a longitudinal edge of said footing. A ledge 4 protrudes from the upper edge of the wall 3 in the direction that lies opposite to the footing 2 and forms a supporting surface for the sheets to be joined whose structure will be clarified hereinafter.

Two rails 5 and 6 are fixed on the footing 2 and form a sliding track for a stitching device 7 and a welding device 8.

The welding device 8 is preferably of the type that can perform high-frequency welding, constituted for example by a welding machine equipped with a high-frequency welding bar manufactured by the company GEAF S.r.l. located at Calestano Parma, Italy, and marketed under the trademark STR. Said welding machine is suitable to advance stepwise with successive strokes whose length is substantially equal to the length of the welding bar.

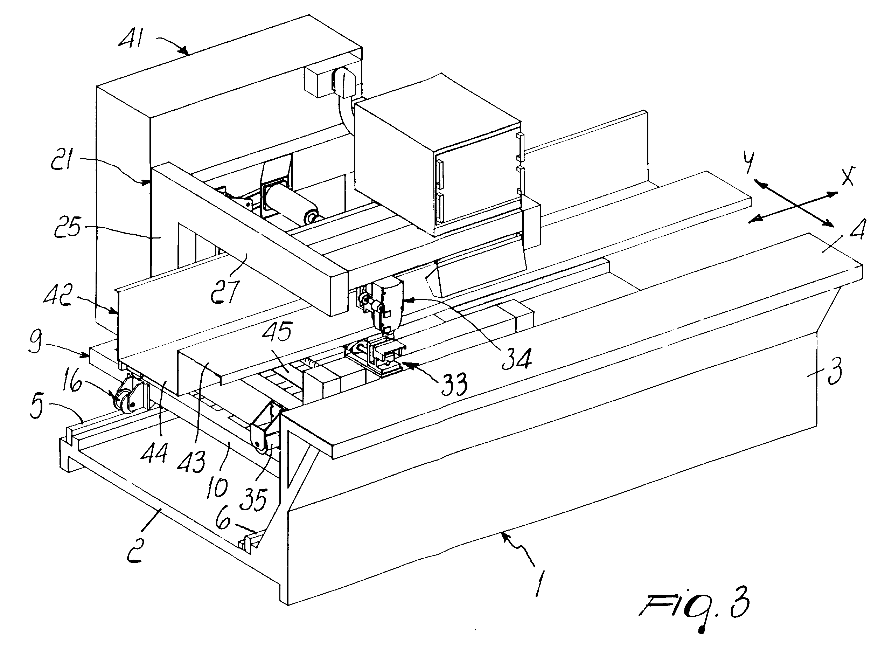

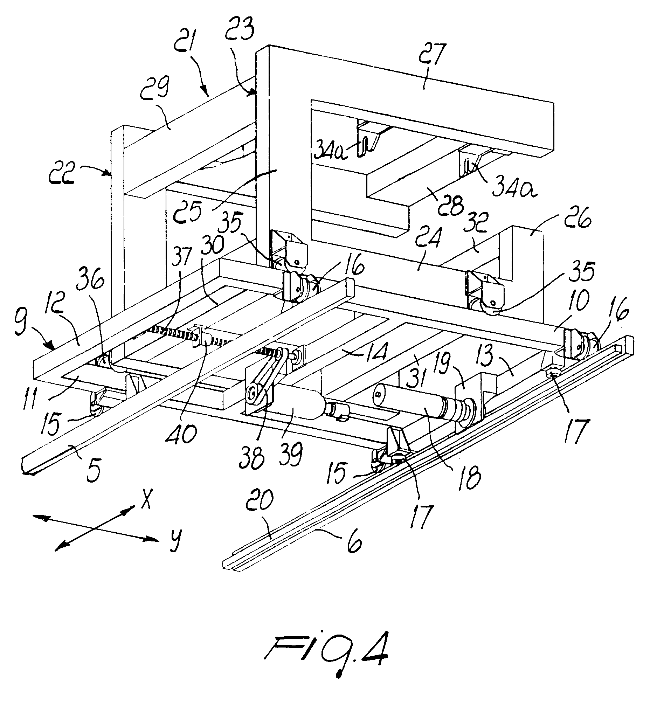

The device 7 is shown more clearly in figures 3 and 4, and comprises a slider 9 which is substantially constituted by a rectangular frame composed of two beams 10 and 11 which are mutually connected by two lateral members 12 and 13 and an intermediate member 14.

Two pairs of wheels 15 and 16 are mounted on the beams 10 and 11; by means of said wheels, the slider 9 can slide along the rails 5 and 6 in the direction hereinafter designated by the letter X. Two additional pairs of wheels 17 (only one of which is shown in figure 4) engage the rail 6 on opposite sides and keep the slider 9 perfectly guided in the direction X, eliminating transverse movements.

The movement of the slider 9 along the rails 5 and 6 is achieved by means of an electric motor 18 which is supported by a bracket 19 which is rigidly coupled to the member 13 and is provided with a toothed pinion that meshes with a rack 20 fixed to one side of the rail 6.

The beams 10 and 11 act as a sliding guide for a second slider generally designated by the reference numeral 21. Said slider comprises two shoulders 22 and 23 having a C-shaped structure; each shoulder has a lower horizontal portion 24 which is parallel to the beams 10 and 11, and respective uprights 25 and 26 rise from the opposite ends of said portion. The two uprights 25 are higher than the two uprights 26, and a horizontal portion 27 extends from their top and reaches above the uprights 26.

The shoulders 22 and 23 are mutually connected by members 28, 29, 39, 31, 32. In particular, the member 32 that connects the tops of the uprights 26 acts as a support for the "crochet" device 33 of a stitching machine (see figure 3) the stitching head 34 whereof is fixed to brackets 34a which are rigidly coupled to the portion 27 of the shoulder 23 so that its working surface is co-planar with respect to the ledge 4. For reasons of clarity in illustration, the stitching machine is not shown in figure 4.

Two pairs of wheels 35 and 36 are applied to the sides of the lower portions 24 of the shoulders 22 and 23 and allow the slider 21 to move in the direction Y at right angles to the direction X.

The movement of the frame in the direction Y is performed by means of a drive unit that comprises a worm screw 37 whose opposite ends are rotatably supported by means of bearings in the members 12 and 14 of the slider 9. The worm screw 37 is driven, by means of a belt 38, by an electric motor 39 which is mounted below the slider 9 and transmits motion to the slider 21 by means of a lead nut 40 which engages on it and is fixed below the member 30 of the slider 21.

The motors 18 and 39 and the stitching machine 33 and 34 are controlled by appropriate electric devices 41 which are mounted on the slider 21 and are not described in detail since they are not pertinent to the present invention.

The apparatus also comprises a stationary channel 42 that extends in the direction X through the shoulders 22 and 23 of the slider 21 and has a ledge 43 which is substantially co-planar to the ledge 4.

The bottom 44 of the channel 42 slideably rests on a roller 45 which is supported on the members 30 and 31 and is parallel to the axis Y.

The operation of the described apparatus is as follows. Assume that a joint is to be formed, as shown in figure 5, between two sheets 46 and 47 made of reinforced plastics, i.e. plastics with an internal reinforcement 48 formed by a net of a material having high-level mechanical strength characteristics (e.g. nylon or polyester) and is embedded in a layer 49 of plastics having high-level characteristics in terms of waterproofing and resistance to external factors. After arranging one sheet in the channel 42 and the other sheet in front of the frame 1, the flaps to be joined are laid on the ledges 43 and 4 and the borders are arranged on top of each other.

For this purpose, at the opposite ends of the frame 1 there are grip elements 50 and 51 which are suitable to grip the opposite ends of the sheets to apply traction in order to ensure the stretching of the borders and the mutual arrangement of their overlapping regions. Said grip means can be constituted by movable clamps which are guided in the direction X and can be mutually spaced by means of manually-actuated or motorized devices.

Once this preparatory step has ended, joining is performed; said joining consists in forming a high-frequency weld 52 in the overlapping borders by means of the device 8 and in forming one or more stitching lines 53 in the overlap region.

Strips 54 and 55 for preventing the seepage of water through the perforations of the stitching lines are applied above and below the joining region.

Conveniently, the high-frequency weld 52 is performed prior to stitching to prevent the stitches from being damaged by the fusing heat.

The apparatus allows to perform joints of any kind with similar methods. For example, figure 6 illustrates a joint in which the borders of the flaps to be joined 46 and 47 are arranged mutually adjacent edgeways and are mutually connected with the aid of strips 56 and 57 which are welded and stitched and covered by welded strips 58 and 59.

It should be noted that in order to produce multiple parallel stitching lines the slider 21 can be moved in the direction Y by activating the motor 39.

The described invention is susceptible to numerous modifications and variations, all of which are within the scope of the inventive concept. For example, in order to avoid excessive flexing of the channel 42 said channel rests on the footing 2 by means of a plurality of longitudinally distributed legs which are articulated so as to lift when the stitching device 7 and the welding device 8 pass and so as to return to the resting position as soon as said devices have passed.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for joining sheets of plastics, characterized in that it comprises: a sliding track (5, 6) that lies horizontally in a first direction (X); means (4, 43) for positioning the sheets (46, 47) so that the borders to be joined are aligned, mutually adjacent and mutually parallel; a stitching device (7) and a welding device (8) that are both movable along said track (5, 6) and are suitable to form the joint by producing stitching (53) and welding (52) lines along said borders.

2. Apparatus according to claim 1, characterized in that said sliding track (5, 6) is arranged on a footing (2) of a frame (1) that comprises a wall (3) which is surmounted by a horizontal ledge (4), and in that said stitching device (7) comprises a first slider (9) that is slideable on said track (5, 6) in said first direction (X) and a second slider (21) that is slideable along said first slider (9) in a second direction (Y) that is at right angles to said first direction (X), a stitching machine (33, 34) being mounted on said second slider (21) and having a working surface that is co-planar with respect to said ledge.

3. Apparatus according to claim 2, characterized in that it comprises a stationary channel (42) that extends in said first direction (X) above said second slider (21) and has a ledge (43) which is co-planar to the working surface of said stitching machine (33, 34), said channel (42) being suitable to receive one of the sheets to be joined.

4. Apparatus according to claim 2, characterized in that said stitching device (7) is actuated along said track (5, 6) by an electric motor (18) which has a pinion that meshes with a rack (20) associated with said track.

5. Apparatus according to claim 3, characterized in that said channel (42) rests on a roller (45) which is rotatably mounted on said second slider (21) at right angles to said first direction (X).

6. Apparatus according to claim 3 or 5, characterized in that said channel (42) rests on the ground by means of a plurality of legs which are articulated so as to lift when the stitching (7) and welding (8) devices pass and so as to return to the resting position as soon as said devices have passed.

7. Apparatus according to one of claims 2 to 6, characterized in that said positioning means comprise, in addition to said ledges (4, 43), two grip elements which are arranged so as to grip the opposite ends of said sheets (46, 47) at the borders to be joined, said grip elements being movable mutually apart in order to stretch said borders.

8. Apparatus according to one of the preceding claims, characterized in that said welding device (8) is constituted by a welding machine with a high-frequency welding bar and is suitable to advance stepwise with strokes whose length is substantially equal to the length of the bar.
